# EUROPÄISCHE PATENTSCHRIFT

(11) **EP 4 074 573 B1**
(45) Veröffentlichungstag und Bekanntmachung des Hinweises auf die Patenterteilung: **20.09.2023**
(21) Anmeldenummer: 21168144.0
(22) Anmeldetag: 13.04.2021
(51) Int. Cl.: B61D 17/22, B60D 5/00

(54) **BALG FÜR EINE ÜBERGANGSEINRICHTUNG**
BELLOWS FOR A TRANSITION DEVICE
SOUFFLET POUR UN AGENCEMENT DE PASSAGE

(43) Veröffentlichungstag der Anmeldung: 19.10.2022
(73) Patentinhaber: Hübner GmbH & Co. KG, 34123 Kassel (DE)
(72) Erfinder: Mosaner, Knud, 34127 Kassel (DE); Stache, Andreas, 34286 Spangenberg (DE)

(56) Entgegenhaltungen:
- EP-A1- 3 466 730
- CN-A- 110 406 335
- CN-U- 209 505 740

## Beschreibung

Die Erfindung betrifft einen Balg für eine Übergangseinrichtung zwischen zwei beweglich miteinander verbundenen Fahrzeugteilen eines Busses oder eines Schienenfahrzeugs, wobei der Balg mehrere Einfassrahmen und mehrere wellenförmige oder faltenförmige Flächenkörper aufweist, welche in den Einfassrahmen aufgenommen sind.

### STAND DER TECHNIK

Aus dem Stand der Technik sind Bälge der vorgenannten Art mit zusätzlichen Kopfabdeckungen bekannt, welche als Sichtschutz für auf dem Dach des Balges geführte Leitungen fungieren. Typischerweise werden zwei derartige Kopfabdeckungen als separate Baueinheiten mit eigenen Einfassrahmen und Flächenkörpern randseitig auf den Dachabschnitt des Balges aufgesetzt, derart, dass die Kopfabdeckungen beidseitig jeweils einen höckerförmigen, die Kontur des Balges überhöhenden Sichtschutz bilden. Zur Anbindung derartiger Kopfabdeckungen werden im Stand der Technik Verbindungsprofile eingesetzt, welche die Einfassrahmen von Balg und Kopfabdeckung klammerartig umschließen und dadurch starr miteinander verbinden. Ein solcher Balg wird beispielsweise im Dokument CN110406335A beschrieben. Diese Ausführungsform hat den Nachteil, dass ein hohes zusätzliches Gewicht auf dem Balg lastet, weshalb dieser dazu neigt, durchzuhängen oder in sich zusammenzusacken. Zudem führt das erhöhte Blockmaß der Einfassrahmen durch die zusätzlichen Verbindungsprofile zu signifikanten Einschränkungen hinsichtlich der durchfahrbaren Minimalradien bei Kurve-Tal-Fahrt der durch den Balg verbundenen Fahrzeugteile. Weiterhin bedingt die separate Montage der Kopfabdeckungen fertigungsseitig einen nachteilig hohen Aufwand.

Alternativ ist es im Stand der Technik bekannt, einen Balg mit Kopfabdeckung derart integriert auszubilden, dass die Flächenkörper des Balges auch den Bereich der Kopfabdeckung durchlaufen. Daraus resultiert jedoch die Notwendigkeit besonders großer Stoffzuschnitte der Flächenkörper für den Bereich der Kopfabdeckung, wodurch diese zur Bildung von Knitterfalten neigen, was die maximal realisierbare Höhe einer derart integrierten Kopfabdeckung deutlich einschränkt und zudem der ästhetischen Anmutung des Balges abträglich ist. Außerdem bieten derart einteilig durchlaufende Flächenkörper nur einen ungenügenden Sichtschutz auf den Dachbereich, da bei Auszug des Balges im Kopfbereich zwischen den Einfassrahmen deutliche Sichtöffnungen freigegeben werden.

### OFFENBARUNG DER ERFINDUNG

Aufgabe der Erfindung ist es, einen gattungsgemäßen Balg mit Kopfabdeckung vorzuschlagen, welcher die vorgenannten Nachteile des Standes der Technik überwindet.

Die erfindungsgemäße Aufgabe wird gelöst durch einen Balg für eine Übergangsrichtung gemäß dem Oberbegriff des unabhängigen Anspruchs 1 in Verbindung mit den kennzeichnenden Merkmalen. Vorteilhafte Weiterbildungen der Erfindung sind in den abhängigen Ansprüchen angegeben.

Die Erfindung schließt die technische Lehre ein, dass die Außenkontur der Flächenkörper mittels eines Radiusabschnittes von einem Seitenbereich in einen Dachbereich übergeht, ohne den Dachbereich in seinem Verlauf zu überhöhen, wobei die Einfassrahmen vom Seitenbereich in einen Kopfabdeckungsbereich übergehen, und wobei in den Einfassrahmen im Kopfabdeckungsbereich wellenförmige oder faltenförmige Abdeckflächenkörper aufgenommen sind, wodurch die Einfassrahmen im Kopfabdeckungsbereich mit den Abdeckflächenkörpern eine rahmenintegrierte Kopfabdeckung bilden.

Erfindungsgemäß wurde erkannt, dass es vorteilhaft ist, eine Kopfabdeckung dadurch in den Balg zu integrieren, dass die Einfassrahmen einen über den Dachbereich erhöhten Kopfabdeckungsbereich durchlaufen, wobei in diesem Kopfabdeckungsbereich separate Abdeckflächenkörper als Sichtschutzmittel in den Einfassrahmen aufgenommen sind. Das bedeutet, dass im Kopfabdeckungsbereich die Außenkontur der Flächenkörper einem anderen Verlauf folgt als die Einfassrahmen. Die Außenkontur der Flächenkörper verläuft entlang des Seitenbereichs, bzw. entlang zweier Seitenbereiche, welche einer rechten und einer linken Seite des Balges entsprechen, sowie entlang des Dachbereiches, wobei die Außenkontur im Übergang zwischen dem Seitenbereich und dem Dachbereich entlang eines Radiusabschnittes verläuft. Entlang des Radiusabschnittes entspricht die Außenkontur der Flächenkörper nicht dem Verlauf der Einfassrahmen, welche stattdessen den oberhalb des Dachbereichs befindlichen Kopfabdeckungsbereich durchlaufen. Der Materialbedarf zur Bildung der Flächenkörper in dem Radiusabschnitt ist folglich auf diejenige Menge begrenzt, welche für den Auszug des Balges notwendig ist, da die Funktion des Sichtschutzes durch die separaten Abdeckflächenkörper ausgeübt wird, welche oberhalb des Radiusabschnittes im Kopfabdeckungsbereich in den Einfassrahmen aufgenommen sind.

Insbesondere bildet die Kopfabdeckung eine höckerförmige Erhebung über den Radiusabschnitt, wobei sich die Abdeckflächenkörper jeweils bis in den Scheitelbereich der höckerförmigen Erhebung der Kopfabdeckung erstrecken. Die Abdeckflächenkörper erstrecken sich außenseitig des Balges vom Scheitelbereich, d. h. dem Bereich um den höchsten Punkt der Kopfabdeckung, bis in den Seitenbereich, wo sie mit den Flächenkörpern überlappen und diese außenseitig überdecken. Durch eine solche Anordnung ist gewährleistet, dass die Kopfabdeckung bei jedwedem Auszug des Balges einen vollflächigen Sichtschutz für den dahinterliegenden Dachbereich und dort verlaufende Leitungen bietet.

Die Einfassrahmen können einteilig vom Seitenbereich in den Kopfabdeckungsbereich übergehen. Alternativ oder zusätzlich können die Einfassrahmen können einteilig vom Kopfabdeckungsbereich in den Dachbereich übergehen. Durch eine solche einteilig durchgehende Ausbildung der Einfassrahmen vom Seitenbereich bis in den Dachbereich ist eine Abstützung gebildet, welche eine große Bauhöhe der Kopfabdeckung, d. h. eine große Überhöhung über den Dachbereich, ohne Stabilitätseinbußen ermöglicht.

Beispielsweise verlaufen die Einfassrahmen jeweils einteilig entlang eines ersten Seitenbereichs, eines zweiten Seitenbereichs, eines ersten Kopfabdeckungsbereichs, eines zweiten Kopfabdeckungsbereichs und des Dachbereichs, wobei sich der Dachbereich zwischen den Seitenbereichen erstreckt und wobei die Kopfabdeckungsbereiche Übergänge zwischen den Seitenbereichen und dem Dachbereich bilden. In dieser Ausführungsform umlaufen die Einfassrahmen folglich die gesamte Außenkontur des Balges, d. h. eine linke und rechte Seite, den Dachbereich, sowie die Kopfabdeckungen, welche sich randseitig des Dachbereichs oberhalb der rechten und der linken Seite befinden. Beispielsweise sind die Einfassrahmen einteilig aus einem entsprechend gebogenen Metallprofil ausgebildet.

Der erfindungsgemäße Balg kann eine Mehrzahl von rahmenartigen Einfassbrücken aufweisen, welche jeweils entlang des Radiusabschnittes verlaufen, wobei die Flächenkörper in den Einfassbrücken aufgenommen sind. Die Einfassbrücken dienen der Aufnahme und Stabilisierung der Flächenkörper, welche wie vorgenannt entlang des Radiusabschnittes nicht in den Einfassrahmen aufgenommen sind. Insbesondere können die Einfassbrücken endseitig jeweils mit einem Einfassrahmen verbunden sein, beispielsweise mittels verpresster Sickenpunkte. Die Einfassbrücken überbrücken somit die Einfassrahmen zwischen dem Seitenbereich und dem Dachbereich, und eine form- oder kraftschlüssige Verbindung zwischen Einfassbrücken und Einfassrahmen erhöht die Stabilität der gesamten Balgkonstruktion.

Beispielsweise weisen die Flächenkörper im Seitenbereich und die Abdeckflächenkörper eine im Wesentlichen gleich große Auszugsweite auf. Somit wird durch das Vorhandensein der Kopfabdeckung die erzielbare Auszugsweite des Balges nicht eingeschränkt.

Beispielsweise können die Abdeckflächenkörper eine geringere Dicke aufweisen und/oder aus einem anderen Werkstoff ausgebildet sein als die Flächenkörper. Dies kann eine besonders kostengünstige Ausführungsform darstellen, wobei ggfs. eine geringere Verschleißbeständigkeit der Abdeckflächenkörper toleriert werden muss.

Weiterhin können die Abdeckflächenkörper beispielsweise eine andere Farbe aufweisen als die Flächenkörper. Dadurch entstehen neue Freiräume betreffend die designerische Ausgestaltung des erfindungsgemäßen Balges.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Bauteil die Rede ist, so ist dies so zu verstehen, dass genau ein Bauteil, zwei Bauteile oder mehrere Bauteile vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine isometrische Teilansicht eines Busses mit einem erfindungsgemäßen Balg,
- Figur 2: eine quergeschnittene Teilansicht eines erfindungsgemäßen Balges,
- Figur 3a, 3b: isometrische Teilansichten eines erfindungsgemäßen Balges, und
- Figur 4: eine isometrische Ansicht eines Einfassrahmens eines erfindungsgemäßen Balges.

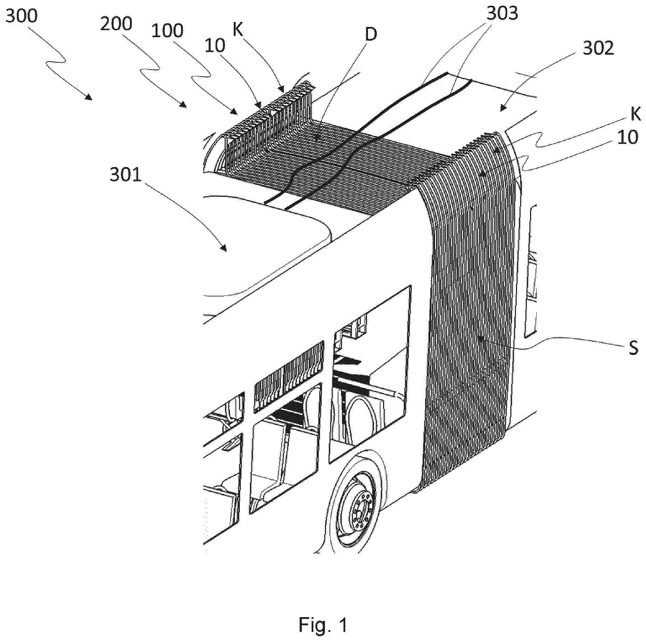

Fig. 1 zeigt eine isometrische Teilansicht eines Busses 300, dessen Fahrzeugteile 301 und 302 mittels der Übergangseinrichtung 200 beweglich miteinander verbunden sind, wobei die Übergangseinrichtung 200 den erfindungsgemäßen Balg 100 aufweist. Der Balg 100 umfasst die Seitenbereiche S, den Dachbereich D sowie die Kopfabdeckungsbereiche K, welche randseitig des Dachbereichs D oberhalb des rechten (abgewandten) und des linken Seitenbereichs S verlaufen. Auf dem Dachbereich D bzw. oberhalb davon verlaufen die Leitungen 303 zur elektrischen Versorgung oder zur Durchführung von Betriebsmedien zwischen den beiden Fahrzeugteilen 301 und 302. Die Funktion der Kopfabdeckungen 10 besteht darin, einen Sichtschutz auszubilden, welcher den Dachbereich D und die darauf verlaufenden Leitungen 303 für einen seitlich neben dem Bus 300 befindlichen Beobachter verdeckt. Die Kopfabdeckungen 10 sind zu diesem Zweck als höckerförmige Erhebungen ausgebildet, welche sich über den Seitenbereichen S über das Niveau des Dachbereichs D hinaus erstrecken und dabei die entsprechende Kontur der Fahrzeugteile 301 und 302 nachbilden.

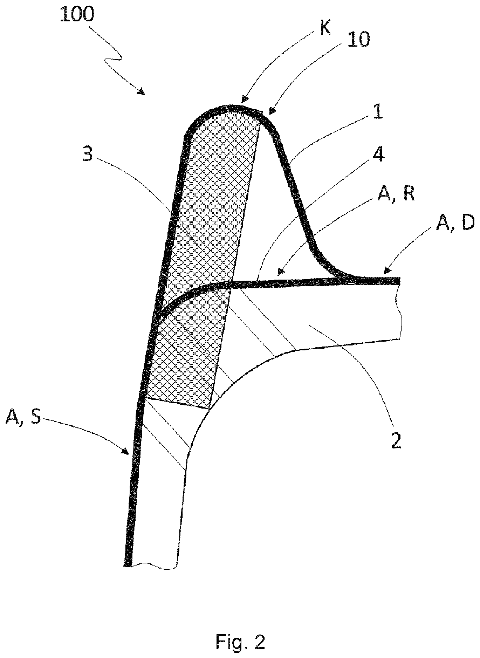

Fig. 2 zeigt eine quergeschnittene Teilansicht eines erfindungsgemäßen Balgs 100, umfassend den Einfassrahmen 1, den hier beispielhaft faltenförmigen ausgebildeten Flächenkörper 2, den beispielhaft faltenförmigen ausgebildeten Abdeckflächenkörper 3 sowie die rahmenartige Einfassbrücke 4. Die Figurenebene ist senkrecht zur Längsrichtung der zugehörigen Übergangseinrichtung und der Balg 100 ist in einem nicht ausgezogenen Zustand dargestellt, in welchem die Flächenkörper 2 und die Abdeckflächenkörper 3 eingefaltet vorliegen. Die Außenkontur A des Flächenkörpers 2 ist gebildet durch den Seitenbereich S, den Radiusabschnitt R sowie den Dachbereich D, wobei der Flächenkörper 2 entlang des Seitenbereichs S sowie des Dachbereichs D an dem Einfassrahmen 1 und entlang des Radiusabschnittes R in der Einfassbrücke 4 aufgenommen ist. Der Einfassrahmen 1 verläuft einteilig entlang des Seitenbereichs S, des Kopfabdeckungsbereichs K sowie des Dachbereichs D. Im Kopfabdeckungsbereich K bildet der Einfassrahmen 1, und damit die Kopfabdeckung 10, eine höckerförmige Erhebung über dem Radiusabschnitt R. Der Abdeckflächenkörper 3 erstreckt sich bis in den Scheitelbereich der höckerförmigen Erhebung der Kopfabdeckung 10, d. h. bis etwa zum höchsten Punkt der Kopfabdeckung 10, wobei der Abdeckflächenkörper 3 in dem Einfassrahmen 1 aufgenommen ist. Unterhalb des Radiusabschnitts R überlappt der Abdeckflächenkörper 3 den Flächenkörper 2, wobei Letzterer hier zum Zwecke der Übersichtlichkeit transparent dargestellt ist und somit in diesem Bereich den Blick auf den dahinter angeordneten, eingefalteten Abdeckflächenkörper 3 freigibt. Der Abdeckflächenkörper 3 ist ausschließlich im Einfassrahmen 1 aufgenommen, nicht aber an der Rahmenbrücke 4, welche lediglich zur Führung und Stabilisierung des Flächenkörpers 2 entlang des Radiusabschnittes R dient. Der Abdeckflächenkörper 3 kann beispielsweise auch im Seitenbereich S im Einfassrahmen 1 aufgenommen sein. Die Einfassbrücke 4 ist endseitig jeweils mit den entsprechenden Abschnitten des Einfassrahmens 1 verbunden, vorzugsweise formschlüssig über Sickenpunkte, welche fertigungsseitig mittels eines Pressvorgangs eingebracht worden sind. Die Tiefe der Falten von Flächenkörper 2 und Abdeckkörper 3, d. h. die jeweilige Auszugsweite, ist im Wesentlichen gleich dimensioniert, sodass die Auszugsweite des Balgs 100 nicht durch die Kopfabdeckung 10 limitiert wird.

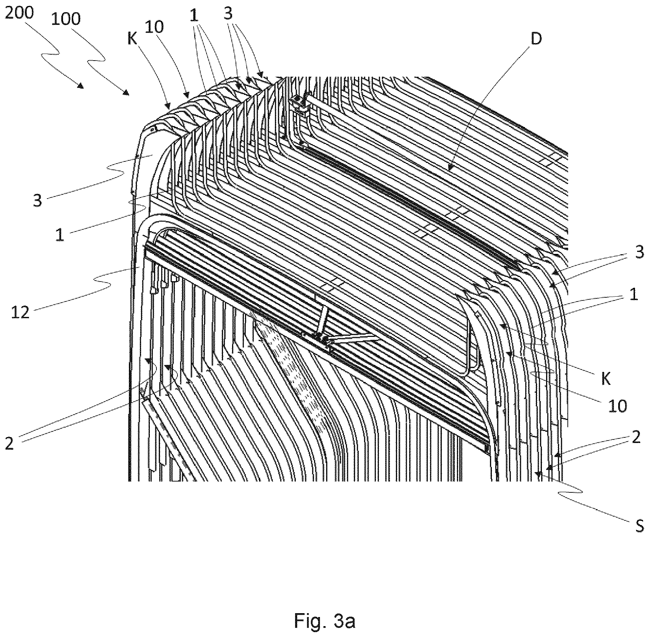

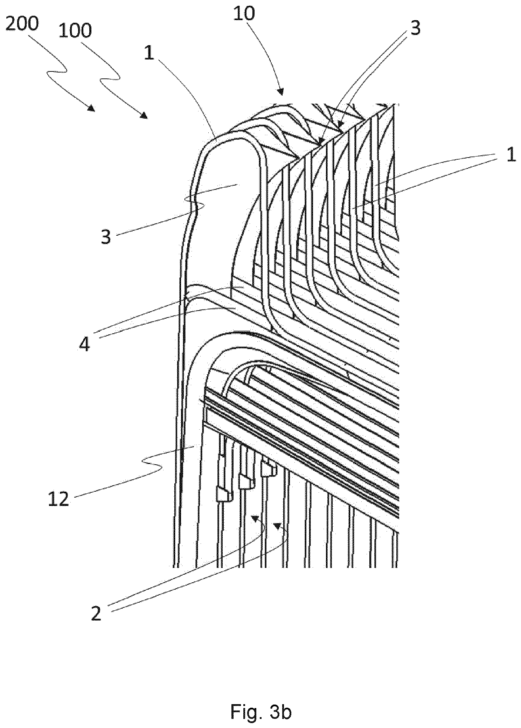

Fig. 3a und Fig. 3b zeigen isometrische Teilansichten einer Übergangseinrichtung 200 mit einem erfindungsgemäßen Balg 100. Endseitig schließt der Balg 100 mit dem Endrahmen 12 zur Anordnung an einem Fahrzeugteil ab, daran anschließend erstreckt sich eine Mehrzahl von Einfassrahmen 1, welche jeweils entlang der Seitenbereiche S, der Kopfabdeckungsbereich K und des Dachbereichs D verlaufen. In den Kopfabdeckungsbereichen K sind die faltenförmigen Abdeckflächenkörper 3 im Einfassrahmen 1 aufgenommen unter Bildung der Kopfabdeckungen 10. Im Dachbereich D sowie im Seitenbereich S sind die faltenförmigen Flächenkörper 2 in den Einfassrahmen 1 aufgenommen, wobei im Radiusabschnitt unter den Kopfabdeckungsbereichen K die Einfassbrücken 4 zur Aufnahme der Flächenkörper 2 vorgesehen sind. Bei Auszug der Übergangseinrichtung 100, insbesondere bei einer Kurve-Berg-Fahrt des zugehörigen Busses oder Schienenfahrzeugs werden die faltenförmig zwischen den Einfassrahmen 1 eingefalteten Abdeckflächenkörper 3 aufgespannt und bilden einen Sichtschutz für den Dachbereich D, wobei sich dieser Sichtschutz bis in den Scheitelbereich der Kopfabdeckungen 10 vollflächig erstreckt.

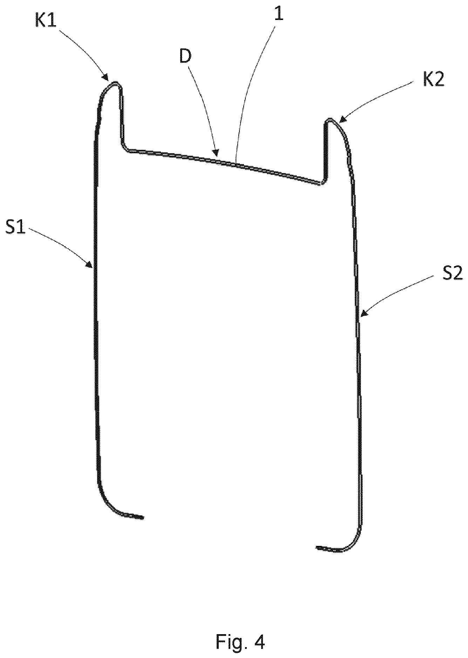

Fig. 4 zeigt eine isometrische Ansicht eines Einfassrahmens 1 eines erfindungsgemäßen Balges, welcher sich einteilig entlang der Außenkontur des zugehörigen Balges erstreckt, d.h. entlang des ersten Seitenbereichs S1, des ersten Kopfabdeckungsbereichs K1, des Dachbereichs D des zweiten Kopfabdeckungsbereichs K2 sowie des zweiten Seitenbereichs S2. Ein derartiger durchgehender Einfassrahmen 1 unter Integration der Kopfabdeckungsbereiche K1 und K2 bildet ein kostengünstig herstellbares, leichtgewichtiges und mechanisch robustes Stützskelett des erfindungsgemäßen Balges. Weiterhin ermöglicht eine solche einteilige Ausführung eine große Freiheit bei der konstruktiven Auslegung des Balges, vornehmlich der Kopfabdeckung.

### Bezugszeichenliste:

- 100: Balg
- 200: Übergangseinrichtung
- 300: Bus
- 301, 302: Fahrzeugteil
- 303: Leitung
- 1: Einfassrahmen
- 2: Flächenkörper
- 3: Abdeckflächenkörper
- 4: Einfassbrücken
- 10: Kopfabdeckung
- 12: Endrahmen
- A: Außenkontur
- D: Dachbereich
- K, K1, K2: Kopfabdeckungsbereich
- R: Radiusabschnitt
- S, S1,S2: Seitenbereich

## Patentansprüche

1. Balg (100) für eine Übergangseinrichtung (200) zwischen zwei beweglich miteinander verbundenen Fahrzeugteilen (301, 302) eines Busses (300) oder eines Schienenfahrzeugs, wobei der Balg (100) mehrere Einfassrahmen (1) und mehrere wellenförmige oder faltenförmige Flächenkörper (2) aufweist, welche in den Einfassrahmen (1) aufgenommen sind,
- wobei die Außenkontur (A) der Flächenkörper (2) mittels eines Radiusabschnittes (R) von einem Seitenbereich (S) in einen Dachbereich (D) übergeht, ohne den Dachbereich (D) in seinem Verlauf zu überhöhen,
- und wobei die Einfassrahmen (1) vom Seitenbereich (S) in einer Kopfabdeckungsbereich (K) übergehen,
- **dadurch gekennzeichnet, dass** in den Einfassrahmen (1) im Kopfabdeckungsbereich (K) wellenförmige oder faltenförmige Abdeckflächenkörper (3) aufgenommen sind, wodurch die Einfassrahmen (1) im Kopfabdeckungsbereich (K) mit den Abdeckflächenkörpern (3) eine rahmenintegrierte Kopfabdeckung (10) bilden.

2. Balg (100) nach Anspruch 1,
**dadurch gekennzeichnet, dass**
die Kopfabdeckung (10) eine höckerförmige Erhebung über dem Radiusabschnitt (R) bildet, wobei sich die Abdeckflächenkörper (3) jeweils bis in einen Scheitelbereich der höckerförmigen Erhebung der Kopfabdeckung (10) erstrecken.

3. Balg (100) nach einem der vorhergehenden Ansprüche,
**dadurch gekennzeichnet, dass**
die Einfassrahmen (1) einteilig vom Seitenbereich (S) in den Kopfabdeckungsbereich (K) übergehen.

4. Balg (100) nach einem der vorhergehenden Ansprüche,
**dadurch gekennzeichnet, dass**
die Einfassrahmen (1) einteilig vom Kopfabdeckungsbereich (K) in den Dachbereich (D) übergehen.

5. Balg (100) nach einem der vorhergehenden Ansprüche,
**dadurch gekennzeichnet, dass**
die Einfassrahmen (1) jeweils einteilig entlang eines ersten Seitenbereichs (S1), eines zweiten Seitenbereich (S2), eines ersten Kopfabdeckungsbereichs (K1), eines zweiten Kopfabdeckungsbereichs (K2) und des Dachbereichs (D) verlaufen, wobei sich der Dachbereich (D) zwischen den Seitenbereichen (S1, S2) erstreckt und wobei die Kopfabdeckungsbereiche (K1, K2) Übergänge zwischen den Seitenbereichen (S1, S2) und dem Dachbereich (D) bilden.

6. Balg (100) nach einem der vorhergehenden Ansprüche,
**dadurch gekennzeichnet, dass**
der Balg (100) eine Mehrzahl von rahmenartigen Einfassbrücken (4) aufweist, welche jeweils entlang des Radiusabschnittes (R) verlaufen, wobei die Flächenkörper (2) in den Einfassbrücken (4) aufgenommen sind.

7. Balg (100) nach Anspruch 6,
**dadurch gekennzeichnet, dass**
die Einfassbrücken (4) endseitig jeweils mit einem Einfassrahmen (1) verbunden sind, insbesondere mittels verpresster Sickenpunkte.

8. Balg (100) nach einem der vorhergehenden Ansprüche,
**dadurch gekennzeichnet, dass**
die Flächenkörper (2) im Seitenbereich (S) und die Abdeckflächenkörper (3) eine im Wesentlichen gleich große Auszugsweite aufweisen.

9. Balg (100) nach einem der vorhergehenden Ansprüche,
**dadurch gekennzeichnet, dass**
die Abdeckflächenkörper (3) eine geringere Dicke aufweisen und/oder aus einem anderen Werkstoff ausgebildet sind als die Flächenkörper (2).

10. Balg (100) nach einem der vorhergehenden Ansprüche,
**dadurch gekennzeichnet, dass**
die Abdeckflächenkörper (3) eine andere Farbe aufweisen als die Flächenkörper (2).

## Claims

1. Bellows (100) for a transition device (200) between two movably connected vehicle parts (301, 302) of a bus (300) or a railway vehicle, the bellows (100) having a plurality of surrounding frames (1) and a plurality of corrugated or folded surface bodies (2) which are received in the surrounding frames (1),
- the outer contour (A) of the surface bodies (2), by means of a radius section (R), transitioning from a side area (S) into a roof area (D) without over-heightening the course of the roof area (D),
- and the surrounding frames (1) transitioning from the side area (S) into a head cover area (K),
- **characterized in that**
corrugated or folded cover surface bodies (3) are received in the surrounding frames (1) in the head cover area (K), whereby the surrounding frames (1) in the head cover area (K), together with the cover surface bodies (3), form a frame-integrated head cover (10).

2. Bellows (100) according to claim 1,
**characterized in that**
the head cover (10) forms a hump-shaped elevation over the radius section (R), the cover surface bodies (3) each extending into an apex area of the hump-shaped elevation of the head cover (10).

3. Bellows (100) according to either of the preceding claims,
**characterized in that**
the surrounding frames (1) transition in one piece from the side area (S) into the head cover area (K).

4. Bellows (100) according to any of the preceding claims,
**characterized in that**
the surrounding frames (1) transition in one piece from the head cover area (K) into the roof area (D).

5. Bellows (100) according to any of the preceding claims,
**characterized in that**
the surrounding frames (1) each extend in one piece along a first side area (S1), a second side area (S2), a first head cover area (K1), a second head cover area (K2) and the roof area (D), the roof area (D) extending between the side areas (S1, S2) and the head cover areas (K1, K2) forming transitions between the side areas (S1, S2) and the roof area (D).

6. Bellows (100) according to any of the preceding claims,
**characterized in that**
the bellows (100) has a plurality of frame-like surrounding bridges (4) which each extend along the radius section (R), the surface bodies (2) being received in the surrounding bridges (4).

7. Bellows (100) according to claim 6,
**characterized in that**
the surrounding bridges (4) are each connected at the ends to a surrounding frame (1), in particular by means of pressed crimping points.

8. Bellows (100) according to any of the preceding claims,
**characterized in that**
the surface bodies (2) in the side area (S) and the cover surface bodies (3) have a substantially equal extension width.

9. Bellows (100) according to any of the preceding claims,
**characterized in that**
the cover surface bodies (3) have a smaller thickness and/or are formed from a different material than the surface bodies (2).

10. Bellows (100) according to any of the preceding claims,
**characterized in that**
the cover surface bodies (3) have a different color than the surface bodies (2).

## Revendications

1. Soufflet (100) pour un dispositif de passage (200) entre deux parties de véhicule (301, 302), reliées de manière mobile entre elles, d'un bus (300) ou d'un véhicule ferroviaire, le soufflet (100) présentant plusieurs cadres de bordure (1) et plusieurs corps plats (2) ondulés ou plissés qui sont logés dans les cadres de bordure (1),
- dans lequel le contour externe (A) du corps plat (2) passe, au moyen d'une section en quart de cercle (R), d'une zone latérale (S) à une zone de toit (D) sans surélever le profil de la zone de toit (D),
- et dans lequel les cadres de bordure (1) passent de la zone latérale (S) à une zone de recouvrement supérieure (K),
- **caractérisé en ce que**
dans les cadres de bordure (1), dans la zone de recouvrement supérieure (K),
sont logés des corps plats de recouvrement (3) ondulés ou plissés, moyennant quoi les cadres de bordure (1) forment, avec les corps plats de recouvrement (3), un élément de recouvrement supérieur (10) intégré dans un cadre dans la zone de recouvrement supérieure (K).

2. Soufflet (100) selon la revendication 1,
**caractérisé en ce que**
l'élément de recouvrement supérieur (10) forme une élévation bosselée au-dessus de la section en quart de cercle (R), les corps plats de recouvrement (3) s'étendant respectivement jusque dans une zone de sommet de l'élévation bosselée de l'élément de recouvrement supérieur (10).

3. Soufflet (100) selon l'une des revendications précédentes,
**caractérisé en ce que**
les cadres de bordure (1) passent, d'un seul tenant, de la zone latérale (S) à la zone de recouvrement supérieure (K).

4. Soufflet (100) selon l'une des revendications précédentes,
**caractérisé en ce que**
les cadres de bordure (1) passent, d'un seul tenant, de la zone de recouvrement supérieure (K) à la zone de toit (D).

5. Soufflet (100) selon l'une des revendications précédentes,
**caractérisé en ce que**
les cadres de bordure (1) s'étendent respectivement, d'un seul tenant, le long d'une première zone latérale (S1), d'une seconde zone latérale (S2), d'une première zone de recouvrement supérieure (K1), d'une seconde zone de recouvrement supérieure (K2) et de la zone de toit (D), la zone de toit (D) s'étendant entre les zones latérales (S1, S2) et les zones de recouvrement supérieures (K1, K2) formant des passages entre les zones latérales (S1, S2) et la zone de toit (D).

6. Soufflet (100) selon l'une des revendications précédentes,
**caractérisé en ce que**
le soufflet (100) présente une pluralité de ponts de bordure (4) de type cadre qui s'étendent respectivement le long de la section en quart de cercle (R), les corps plats (2) étant logés dans les ponts de bordure (4).

7. Soufflet (100) selon la revendication 6,
**caractérisé en ce que**
les ponts de bordure (4) sont reliés, côté extrémité, à respectivement un cadre de bordure (1), en particulier au moyen de points de sertissage pressés.

8. Soufflet (100) selon l'une des revendications précédentes,
**caractérisé en ce que**
les corps plats (2) dans la zone latérale (S) et les corps plats de recouvrement (3) présentent une largeur d'extension sensiblement identique.

9. Soufflet (100) selon l'une des revendications précédentes,
**caractérisé en ce que**
les corps plats de recouvrement (3) présentent une épaisseur inférieure à celle des corps plats et/ou sont réalisés en un autre matériau que celui des corps plats (2).

10. Soufflet (100) selon l'une des revendications précédentes,
**caractérisé en ce que**
les corps plats de recouvrement (3) présentent une autre couleur que celle des corps plats (2).
